Europäisches Patentamt

European Patent Office

Office européen des brevets

(19)

(11) Veröffentlichungsnummer: **0 255 014 B1**

# EUROPÄISCHE PATENTSCHRIFT

(12)

(45) Veröffentlichungstag der Patentschrift: **23.10.91**

(21) Anmeldenummer: **87110487.3**

(22) Anmeldetag: **20.07.87**

(51) Int. Cl.⁵: **B29C 65/40, B29C 65/82,** //B29L7:00

(54) **Verfahren zum kontinuierlichen Überlappungsverschweissen von grossflächigen Kunststoff-Folien oder -Platten.**

(30) Priorität: **21.07.86 DE 3624573**

(43) Veröffentlichungstag der Anmeldung: **03.02.88 Patentblatt 88/05**

(45) Bekanntmachung des Hinweises auf die Patenterteilung: **23.10.91 Patentblatt 91/43**

(84) Benannte Vertragsstaaten: **AT BE CH DE ES FR GB GR IT LI LU NL SE**

(56) Entgegenhaltungen:
| | |
|---|---|
| CH-A- 420 586 | DE-A- 3 201 515 |
| DE-A- 3 520 682 | DE-U- 1 970 950 |
| DE-U- 7 404 530 | FR-A- 2 393 993 |
| GB-A- 680 450 | US-A- 3 008 862 |
| US-A- 3 166 458 | |

PATENT ABSTRACTS OF JAPAN, Band 7, Nr. 64 (P-183)[1209], 17. März 1983; & JP-A-57-208 429 (ISHIKAWAJIMA HARIMA JUKOGYO K.K.) 21-12-1982

(73) Patentinhaber: **SLT LINING TECHNOLOGY GmbH**
**Pollhornweg 17**
**W-2102 Hamburg 93(DE)**

(72) Erfinder: **Brandt, Michael**
**Eddelsener Siedlung 4**
**W-2105 Seevetal 1(DE)**

(74) Vertreter: **Glawe, Delfs, Moll & Partner Patentanwälte**
**Postfach 26 01 62 Liebherrstrasse 20**
**W-8000 München 26(DE)**

Rank Xerox (UK) Business Services

**Beschreibung**

Die Erfindung betrifft ein Verfahren zum kontinuierlichen Überlappungsverschweißen von großflächigen thermoplastischen Kunststoff-Folien oder -Platten mit zwei parallelen Schweißnähten, wobei die zu verschweißenden Oberflächen im Bereich der Schweißnähte, zwischen denen ein streifenförmiger Bereich eingeschlossen wird, in dem die Folien nicht miteinander verschweißt werden, unter Einbringung von Strängen eines gleichartigen Zusatzwerkstoffs im heißplastischen Zustand zwischen die Oberflächen so verbunden werden, daß die Folien im streifenförmigen Bereich einen Abstand voneinander aufweisen.

Bei einem solchen vorbekannten Verfahren (US-A 3,008,862, Fig. 4) dient die doppelte Schweißnaht der Herstellung von Säcken oder Schläuchen, indem jeweils ein Schnitt zwischen zwei benachbarten Schweißnähten durchgeführt wird.

Insbesondere, da es aus der FR-A 2 393 993 bekannt ist, durch parallele Klebemittelstreifen gebildete Kanäle zur Überprüfung der Verbindung der Folien zu verwenden, könnte man auf die Idee kommen, nachdem die Schweißnaht hergestellt ist, den streifenförmigen oder schlauchförmigen Bereich, der sich gebildet hat, an einem Ende zu verschließen und am anderen Ende z.B. mit Druckluft zu beaufschlagen, um festzustellen, ob der streifenförmige Bereich dicht ist, wobei Undichtigkeit ein Hinweis auf eine fehlerhafte Schweißnaht ist. Diese Prüfung ist sehr wichtig, da die Schweißnähte sorgfältig geprüft werden, bevor die Kunststoff-Folien oder -Platten zum Beispiel in den Erdboden verlegt werden.

Bei dem vorbekannten Schweißverfahren (US-A 3,008,862) liegen aber die Folien mehr oder weniger flach aufeinander, was verschiedene Nachteile hat.

Einmal kann nicht verhindert werden, daß, da die beiden Folien auch im streifenförmigen Bereich aufeinanderliegen, flüssiges Material während des Schweißens von einer Schweißnaht zu anderen eine Brücke bildet, so daß hier der schlauchförmige Bereich verschlossen, d.h. unterbrochen wäre. Es ist dann anschließend keine richtige Prüfung auf ausreichende Qualität der Schweißnaht mehr möglich. Da die Oberflächen der Folien im streifenförmigen Bereich aufeinanderliegen, werden sie noch fester aufeinandergedrückt, nachdem die Folien zum Beispiel im Erdreich verlegt sind oder als Flüssigkeitsbehälter dienen und dann unter dem hydrostatischen Flüssigkeitsdruck stehen. Irgendwelche Prüfungen können dann nicht mehr durchgeführt werden.

Außerdem entsteht am Rand des streifenförmigen Bereichs, also im Bereich der Schweißnähte beim Prüfen mit Druck eine sehr nachteilige Kerb- oder Keilwirkung, so daß die Schweißnähte hier beschädigt werden können. Das gilt insbesondere, wenn die Prüfung bei niedrigen Außentemperaturen durchgeführt werden, bei denen dann wegen der entsprechenden Unelastizität der Kunststoff-Folien leicht Beschädigungen auftreten können.

Die Aufgabe der Erfindung besteht darin, ein Verfahren der eingangs genannten Art zu schaffen, bei dem die Schweißnähte besser geprüft werden können und bei denen die Gefahr der Beschädigung der Schweißnähte beim Prüfvorgang wesentlich geringer ist.

Die erfindungsgemäße Lösung besteht darin, daß eine Folie oder Platte so verschweißt wird, daß sie im streifenförmigen Bereich quer zur Schweißnahtrichtung nach außen konvex gewölbt ist, und daß die Schweißnähte so ausgebildet werden, daß die aufeinander zu zeigenden Kantenflächen des Zusatzwerkstoffs im Querschnitt quer zur Schweißnahtrichtung konkav gekrümmt sind.

Ein wesentlicher Punkt ist, daß die Folien wegen der am Rand vorhandenen Streifen des Zusatzmaterials und insbesondere wegen der Wölbung im streifenförmigen Bereich nicht mehr flach aufeinanderliegen. Es besteht daher auch nicht die Gefahr, daß der streifenförmige Bereich durch einen dünnen Materialfilm an einer Stelle überbrückt und unterbrochen wird. Es bleibt sogar dann noch ein schlauchförmiger Bereich offen, falls man eine Prüfung mit nicht zu hohem Unterdruck durchführt; dies ist bei nach den vorbekannten Verfahren verbundenen Folien nicht möglich. Ein solcher Kanal kann sogar dann verbleiben, nachdem die Folie im Erdreich angeordnet ist oder aber in einem Flüssigkeitsbehälter als Wandung angeordnet ist.

Man hat also, wenn man das erfindungsgemäße Verfahren verwendet, wesentlich bessere Prüfmöglichkeiten, sogar noch, nachdem die Folie ihrer Verwendung zugeführt ist. Man könnte auch daran denken, durch diese immer offenen Kanäle im Falle von Störungen erstarrende Flüssigkeiten einzufüllen, durch die ein Leck im Nahtbereich repariert werden könnte. Man könnte andererseits auch diese schlauchförmigen Bereiche als Detektoren für Beschädigungen verwenden, indem bei Beschädigungen im Nahtbereich Flüssigkeit in den schlauchförmigen Bereich eindringen und nach unten fließen würde, wo sie detektiert werden könnte.

Die Kerbwirkung bei der Prüfung wird dadurch weiter verringert, daß die Schweißnähte so ausgebildet sind, daß die aufeinanderzu zeigenden Kantenflächen des Zusatzwerkstoffs im Querschnitt quer zur Schweißnahtrichtung konkav gekrümmt sind, so daß spitze Ecken bzw. Kanten beim Prüfen der Naht mit Druckluft nicht mehr auftreten könen. Dies ist insbesondere bei der Prüfung bei tiefen Temperaturen wesentlich.

Als besonders vorteilhaft hat es sich erwiesen, wenn die Folien im Bereich des streifenförmigen Bereichs einen Abstand von ungefähr mehr als 1 mm, insbesondere von ungefähr 1,5 bis 2 mm haben. Als Breite des streifenförmigen Bereiches hat sich ein Mindestwert von 10 mm als günstig erwiesen, besonders vorteilhaft sind Streifenbreiten von 15 bis 20 mm.

Das erfindungsgemäße Verfahren kann auf besonders vorteilhafte Weise durchgeführt werden, wenn die Zusatzwerkstoffstränge durch Teilung eines Stranges aus einer Extrusionsdüse gebildet werden.

Die Erfindung wird im folgenden anhand von Beispielen näher erläutert. Es zeigen:

Figur 1    im Querschnitt zwei nach einem vorbekannten Verfahren verbundene Folien während der Prüfung mit Druckluft;

Figur 2    zwei nach einem anderen Verfahren verbundene Folien im Ruhezustand und

Figur 3    eine Ausführungsform der Erfindung ebenfalls im Zustand ohne überdruck.

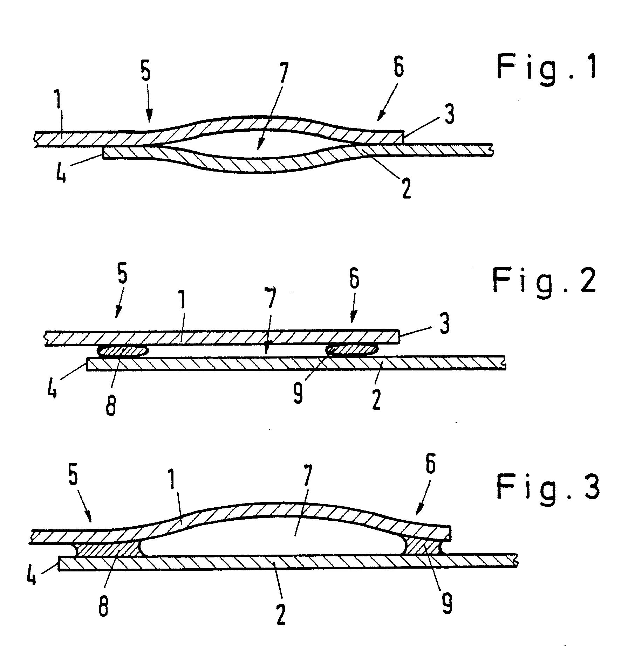

In der Figur 1 sind zwei Folien (1 und 2) gezeigt, die mit überlappenden Kanten (3 und 4) übereinandergelegt worden sind. Diese Folien sind bei (5 und 6) durch Heißluft, Heizkeile oder dergleichen verschweißt worden. Wird, wie dies in Figur 1 dargestellt ist, Überdruck an den streifenförmigen Bereich (7) zwischen den beiden Schweißnähten (5 und 6) angelegt, so ergibt sich im Bereich der Schweißnähte (5 und 6) eine Kerb-oder Keilwirkung, durch die die Folie beschädigt werden kann. Außerdem liegen die Folien ohne überdruck im Bereich (7) flach aufeinander, was die bereits erwähnten Nachteile hat.

Bei einem anderen Verfahren treten diese Nachteile weniger auf, wenn die Zusatzwerkstoffstränge entsprechend dick sind. Bei entsprechend verbundenen Folien (1 und 2) befinden sich im Bereich der Schweißnähte (5 und 6), wie dies in Figur 2 gezeigt ist, Materialstränge (8 und 9) eines Materials, das dem Folienmaterial gleichartig ist, so daß die Folien (1 und 2) auch im streifenförmigen Bereich zwischen den Schweißnähten (5 und 6) immer einen Abstand voneinander aufweisen, so daß hier der streifenförmige Bereich (7) immer offen gehalten wird. Selbst wenn äußerer Druck ausgeübt wird oder zum Prüfen ein Vakuum angelegt wird, bleibt der streifenförmige Bereich (7) wenigstens immer am Rand teilweise offen. Die Keil- oder Kerbwirkung wie bei Figur 1 kann ebenfalls nicht auftreten.

Dies ist erst recht bei der Art der erfindungsgemäßen Verbindung der Figur 3 der Fall, wenn nämlich die Zusatzwerkstoffe (8 und 9) so angeordnet sind, daß sie die Folien (1 und 2) an ihren Oberflächen benetzen, das heißt hier eine im Querschnitt der Figur 3 konkave Oberfläche haben. Irgendwelche Kräfte beim Prüfen werden hier kontinuierlich und gleichmäßig von den Folien auf den Zusatzwerkstoff und auf die andere Folie weiter übertragen. Außerdem ist die obere Folie (1) so angeordnet, daß sie sich nach außen wölbt, und zwar auch dann, wenn kein innerer Überdruck im streifenförmigen Bereich (7) vorhanden ist. Auf diese Weise wird die Prüfung sogar mit Vakuum ermöglicht; der streifenförmige Bereich (7) bildet einen durchgehenden Schlauch auch dann, wenn die Folie bei ihrer Verwendung von außen mit Druck beaufschlagt wird.

Man könnte schließlich sogar vorsehen, zusammen mit dem Zusatzwerkstoff (8 und 9) einen Draht zu extrudieren, mit dem die Schweißnaht zusätzlich geprüft werden könnte.

Die Ausführungsform, bei der ein Draht in den Zusatzwerkstoff hinein extrudiert wird, ist nur eine von möglichen Ausgestaltungen und Spezialanwendungen. Für solche Spezialanwendungen wäre es auch denkbar, die Dicke des streifenförmigen Bereichs nicht mindestens 1 mm sein zu lassen, sondern kleiner, bis herab zu 0,1 mm.

**Patentansprüche**

1.  Verfahren zum kontinuierlichen Überlappungsverschweißen von großflächigen thermoplastischen Kunststoff-Folien oder -Platten (1,2) mit zwei parallelen Schweißnähten (5,6), wobei die zu verschweißenden Oberflächen im Bereich der Schweißnähte (5,6), zwischen denen ein streifenförmiger Bereich (7) eingeschlossen wird, in dem die Folien nicht miteinander verschweißt werden, unter Einbringung von Strängen (8, 9) eines gleichartigen Zusatzwerkstoffs im heißplastischen Zustand zwischen die Oberflächen so verbunden werden, daß die Folien (1,2) im streifenförmigen Bereich (7) einen Abstand voneinander aufweisen, dadurch gekennzeichnet, daß eine Folie oder Platte (1,2) so verschweißt wird, daß sie im streifenförmigen Bereich quer zur Schweißnahtrichtung nach außen konvex gewölbt ist, und daß die Schweißnähte (5,6) so ausgebildet werden, daß die aufeinander zu zeigenden Kantenflächen des Zusatzwerkstoffs (8,9) im Querschnitt quer zur Schweißnahtrichtung konkav gekrümmt sind.

2.  Verfahren nach Anspruch 1, dadurch gekennzeichnet, daß beim Schweißen die obere Folie oder Platte (1) im streifenförmigen Bereich (7) gewölbt wird.

3.  Verfahren nach Anspruch 1 oder 2, dadurch gekennzeichnet, daß die Breite des unverschweißten streifenförmigen Bereichs größer als ungefähr 10 mm ausgebildet wird.

4. Verfahren nach einem der Ansprüche 1 bis 3, dadurch gekennzeichnet, daß die Breite des unverschweißten streifenförmigen Bereichs zwischen ungefähr 15 bis 20 mm ausgebildet wird.

5. Verfahren nach einem der Ansprüche 1 bis 4, dadurch gekennzeichnet, daß die Folien im streifenförmigen Bereich einen Abstand von mehr als ungefähr 1 mm haben.

6. Verfahren nach Anspruch 5, dadurch gekennzeichnet, daß die Folien im streifenförmigen Bereich einen Abstand von ungfähr 1,5 bis 2 mm haben.

7. Verfahren nach einem der Ansprüche 1 bis 6, dadurch gekennzeichnet, daß die Zusatzwerkstoffstränge (8,9) durch Teilung eines Stranges aus einer Extrusionsdüse gebildet werden.

## Claims

1. A method for the continuous lap-welding of large thermoplastic plastics films or sheets (1, 2) with two parallel weld seams (5, 6), wherein the surfaces to be welded are so joined in the vicinity of the weld seams (5, 6), between which a strip-like zone (7) is enclosed in which the films are not welded together, by introducing strands (8, 9) of a similar additional material in a hot plastic state between the surfaces, so that the films (1, 2) are spaced apart in the strip-like zone (7), characterised in that a film or sheet (1, 2) is so welded that in the strip-like zone it is curved convexly outwards transversely to the direction of the weld seam, and in that the weld seams (5, 6) are so formed that the mutually facing edge surfaces of the additional material (8, 9) are curved concavely in a cross-section transverse to the direction of the weld seam.

2. A method according to Claim 1, characterised in that during welding the upper film or sheet (1) is curved in the strip-like zone (7).

3. A method according to Claim 1 or 2, characterised in that the width of the unwelded strip-like zone is greater than about 10 mm.

4. A method according to any one of Claims 1 to 3, characterised in that the width of the unwelded strip-like zone is between about 15 to 20 mm.

5. A method according to any one of Claims 1 to 4, characterised in that in the strip-like zone the films are spaced apart by more than about 1 mm.

6. A method according to Claim 5, characterised in that in the strip-like zone the films are spaced apart by about 1.5 to 2 mm.

7. A method according to any one of Claims 1 to 6, characterised in that the strands of additional material (8, 9) are formed by separating a strand from an extrusion die.

## Revendications

1. Procédé de soudage en continu à recouvrement de grandes feuilles ou plaques (1, 2) de matiere thermoplastique, avec deux lignes parallèles de soudure (5, 6), les faces à souder étant reliées dans la zone des lignes de soudure (5, 6), entre lesquelles est incluse une zone en forme de bande (7) dans laquelle les feuilles ne sont pas soudées entre elles, par dépôt de cordons (8, 9) d'un matériau d'apport de même type à l'état plastique chaud entre les surfaces, de telle manière que les feuilles (1, 2) présentent un écart entre elles dans la zone en forme de bande (7), caractérisé en ce qu'une feuille ou plaque (1, 2) est soudée de telle manière qu'elle est cintrée convexe vers l'extérieur dans la zone en forme de bande, transversalement à la direction de la ligne de soudure, et en ce que les lignes de soudure (5, 6) sont réalisées de telle manière que les chants du matériau d'apport (8, 9) qui doivent être en regard l'un de l'autre présentent une courbure concave en coupe transversale à la direction de la ligne de soudure.

2. Procédé suivant la revendication 1, caractérisé en ce que, lors du soudage, la feuille ou plaque supérieure (1) est cintrée dans la zone en forme de bande (7).

3. Procédé suivant la revendication 1 ou 2, caractérisé en ce que la largeur de la zone non soudée en forme de bande est supérieure à environ 10 mm.

4. Procédé suivant les revendications 1 à 3, caractérisé en ce que la largeur de la zone non soudée en forme de bande se situe entre environ 15 et 20 mm.

5. Procédé suivant l'une quelconque des revendications 1 a 4, caractérisé en ce que les feuilles ont, dans la zone en forme de bande, un écartement supérieur a environ 1 mm.

6. Procédé suivant la revendication 5, caractérisé en ce que les feuílles ont, dans la zone en forme de bande, un écartement d'environ 1,5 à 2 mm.

7. Procédé suivant l'une quelconque des revendications 1 à 6, caractérisé en ce que les cordons de matériau d'apport (8, 9) sont formes par division d'un boudin venant d'une filière d'extrudeuse.

Fig.1

Fig.2

Fig.3